# EUROPEAN PATENT SPECIFICATION

(11) **EP 3 741 601 B1**
(45) Date of publication and mention of the grant of the patent: **09.10.2024**
(21) Application number: 20175853.9
(22) Date of filing: 20.05.2020
(51) Int. Cl.: B60K 6/442, B60K 6/48, B60K 6/485, B60K 6/387, B60K 6/547, B60W 10/02, B60W 10/11, B60W 10/06, B60W 10/08, B60W 30/19, B60W 20/00, B60W 20/15

(54) **VEHICLE COMPRISING A TRANSMISSION ARRANGEMENT**
FAHRZEUG MIT FAHRZEUGGETRIEBEANORDNUNG
VÉHICULE AVEC AGENCEMENT DE TRANSMISSION

(30) Priority: 20.05.2019 IT 201900007008
(43) Date of publication of application: 25.11.2020
(73) Proprietor: FPT Motorenforschung AG, 9320 Arbon (CH)
(72) Inventor: GSTREIN, Wolfgang, 6900 BREGENZ (AT); FESSLER, Harald, 9320 ARBON (CH)
(74) Representative: Studio Torta S.p.A.

(56) References cited:
- WO-A2-2014/202068
- DE-A1- 102005 016 117
- DE-A1- 4 323 601
- US-A1- 2004 204 286
- US-A1- 2009 048 747

## Description

### Cross-reference to related applications

This patent application claims priority from Italian patent application no. 102019000007008 filed on 20/05/2019.

### Field of the invention

The present invention relates to a method and architecture to manage energy delivered by a combustion engine crankshaft to a vehicular transmission.

### Description of the prior art

The combustion engine crankshaft are interconnected with the drive wheel of a vehicle through a gearbox and a clutch interposed between the primary shaft of the gearbox and the combustion engine crankshaft.

Industrial vehicles are also equipped with engine brake systems in order to brake the vehicle by exploiting the combustion engine itself before or in parallel with the activation of the conventional brakes.

During gear shifts, often the crankshaft speed should be reduced to "fit" the gearbox primary shaft speed. This speed adaptation is carried out during main clutch release, thus the energy is wasted as frictions.

The crank shaft speed has to be adjusted for each gear shifting. A fast adjustment of the crank shaft speed enables good drivability reduced drive force loss).

A sudden modification of the crankshaft speed leads to energy consumption, especially when the crank shaft speed has to be reduced. The engine brake is sometimes activated to enable reduce crankshaft speed to obtain a fast gear shifting. Consequently, such crankshaft energy is lost. An up-and-down-shift costs about 1% of total fuel consumption per gear shifting within 1km.

US2004/204286A1 and US2009/048747A1 disclose solutions having an engine, a flywheel together with an integrated electric machine, coupled to the output shaft of the engine, a clutch, and a further electric machine arranged downstream of the clutch.

DE102005016117A1 discloses an electric motor arranged between an engine and a clutch, and controlled together with the engine to synchronize the engine speed with a transmission speed.

WO2014/202068A2 discloses a solution having an engine, an electric machine, a freewheel arranged between the engine and the electric machine, a downstream transmission, and a clutch arranged between the electric engine and the transmission.

### Summary of the invention

The main object of the present invention is to propose an architecture to achieve a fast crank-shaft speed adaptation by limiting energy losses.

The main concept of the present invention is the implementation of a first motor-generator directly coupled with the engine crankshaft and a second motor-generator, which optionally is directly connected with the input shaft of the gearbox.

Any time the crankshaft speed must be slowed, its energy content is recovered by the first motor-generator, for example, before the activation of a higher gear (up-shifting) during vehicle accelerations or when the engine is turned off and/or operated at idle when the vehicle goes into sailing mode and/or during regenerative braking instead.

Any time the crankshaft speed must be speeded up, the first motor-generator can help to avoid any speed overshoot. Indeed, the crankshaft speed can be controlled by the combustion engine acceleration, but the speed dynamics depends on combustion engine crankshaft.

Thanks to the present invention, a fast and precise crankshaft speed control is achieved improving gearshift speed and improved comfort.

On the opposite side of the first motor-generator with respect to the main clutch is arranged the second motor-generator, capable to enable an adjustment of the gear input speed for better synchronization during gear shift.

According to the invention, the first motor-generator is integrated into a first portion of the flywheel defined by a dual-mass flywheel, while the second motor-generator is at least partially integrated into a second portion of the flywheel.

According to a solution that is not part of the present invention, the flywheel is a single mass, and the first and second portions correspond to the first and second face of the single monolithic disc defining the flywheel. According to the invention, the flywheel is a dual-mass fly wheel, the first portion corresponds to a first disc and the second portion correspond to a second disc, and between the first and second portions of the dual-mass flywheel a torsional vibration damper is arranged. The second portion of the dual-mass flywheel is shaped as a bell in which the main clutch is arranged. The second motor-generator is partially arranged within the bell in order to limit the longitudinal extension of the whole assembly.

These and further objects are achieved by means of the attached dependent claims, which describe preferred embodiments of the invention, forming an integral part of the present description.

### Brief description of the drawings

The invention will become fully clear from the following detailed description, given by way of a mere exemplifying and non-limiting example, to be read with reference to the attached drawing figures, wherein:

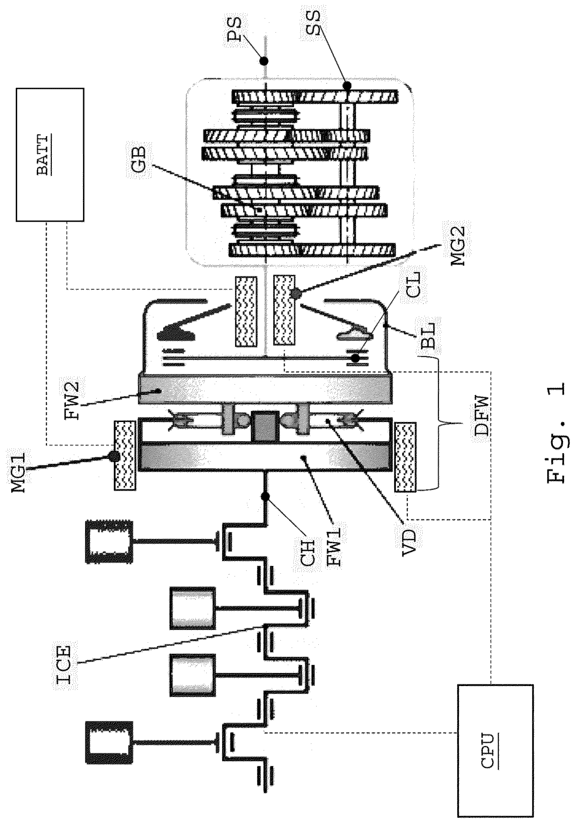

- Fig. 1 shows a possible layout of the present invention.

The same reference numerals and letters in the figures designate the same or functionally equivalent parts.

According to the present invention, the term "second element" does not imply the presence of a "first element", first, second, etc.. are used only for improving the clarity of the description and they should not be interpreted in a limiting way.

### Detailed description of the preferred embodiments

According to figure 1, an internal combustion engine ICE is schematized with four piston connected to the engine crankshaft CK.

The crankshaft is directly connected to a dual-mass flywheel DFW, which includes a first flywheel FW1 and a second flywheel FW2, coupled together through a vibration damper VD per se known.

The first flywheel FW1 defines also the rotor of a first motor-generator MG1, schematically indicated through the windings or permanent magnets of the stator.

Such first motor-generator can be a radial of axial flux motor-generator. Therefore, it should be understood that, in spite of the figure 1, where the stator is depicted radially with respect to the rotor as in a radial flux drive, the stator can be arranged to define an axial flow drive.

The expression "the first motor generator integrates a first portion or second portion of the flywheel" means that the rotor of the motor generator is exploited not only to generate or adsorb torque, but also for its inertia as a flywheel. For this reason flat rotors are preferred because the inertia is proportional to the square of their radial extension.

An axial flow drive is preferred as first motor-generator, due to its limited axial extension and the high torque developed.

The second flywheel FW2 defines the basis of a bell BL in which the main clutch CL is arranged.

The main clutch is connected, on one side, with the second flywheel and, on the opposite site, to the primary shaft PS of the gearbox GB.

A second motor-generator MG2 is enslaved on the shaft connecting the main clutch CL with the primary (input) shaft PS of the gearbox GB. It is useful in certain preferred embodiments of the control method disclosed here below.

According to a first aspect of the present invention, any time the main clutch CL is open and the crankshaft speed needs to be slowed down the first motor-generator MG1 applies a negative torque. The mechanical energy is, thus, converted into electric energy.

This energy can be stored into a battery pack BATT or used to supply the second motor-generator. This means that the battery pack can be present according to preferred implementations of the present invention.

The recovered electric energy can be exploited, without intermediation of the storage batteries, to adjust the gear box input shaft speed in order to improve synchronization of the gearbox. In other words, batteries are optional. Instead, with a battery storage, it is possible to control such motor-generator(s) to supplement the combustion engine during vehicle accelerations. Any supplementing operation, which is not essential for carrying out the present invention, needs the presence of a battery pack.

According to a preferred embodiment of the invention, the electric energy drained to slow down the crankshaft, partly is used to improve synchronization of the input shaft of the gearbox through the second motor-generator, and an excess of energy is stored in the battery pack. Immediately after the gear-shifting, such excess of energy is supplied to the first and/or second motor generator to supplement the internal combustion engine.

According to another aspect of the present invention, when during downshifts the crankshaft speed needs to be increased, while the main clutch is going to close, the crankshaft speed is controlled through fuel injection but also thought the first motor-generator which can exert a positive and/or negative torque to the crankshaft according to the combustion engine dynamics. For example in a first time period, the first motor-generator exerts a positive torque to supplement the combustion engine, and in a consequent second time period, the first motor-generator can exert a negative torque to limit crankshaft speed overshoot.

Thanks to the present invention, gear-shifting becomes faster and the driveability is improved without increase fuel consumption.

In addition, the architecture can be exploited as long as the main clutch is closed to perform all the known operations of the parallel hybrid vehicles, with the first and second motor-generator operating simultaneously and in parallel during regenerative braking and during vehicle acceleration supplementing the internal combustion engine. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the invention which is defined by the appended claims.

In some example embodiments, well known processes, well-known device structures are disclosed.

For example, the control of the first and/or second motor generator can be carried out by the same control unit ECU usually implemented to control the internal combustion engine.

Usually, the vehicles are provided of a CAN data network interconnecting the ECU with sensors and actuators. A first speed sensor is usually associated with the first flywheel and a second speed sensor is associated to the input shaft PS of the gearshift in order to monitor also a reciprocal speed difference, indicating the engaged/disengaged condition of the main clutch. The skilled person knows that when a speed difference can be appreciated, this implies at least a partial disengagement of the main clutch.

Many changes, modifications, variations and other uses and applications of the subject invention will become apparent to those skilled in the art after considering the specification and the accompanying drawings which disclose preferred embodiments thereof as described in the appended claims.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. Vehicle comprising:
- driving wheels;
- an internal combustion engine (ICE) having a crankshaft (CH) ;
- a transmission arrangement arranged to transfer propulsion from the crankshaft to the driving wheels; the transmission arrangement comprising:
a) a double-mass flywheel (DFW; FW1, FW2) comprising:
(1) a first portion (FW1) directly coupled to the crankshaft (CH) and corresponding to a first flywheel, and
(2) a second portion (FW2) corresponding to a second flywheel,
b) a main clutch (CL),
c) a gearbox (GB) arranged between the main clutch (CL) and said driving wheels, and comprising an input shaft (PS) able to be interconnected with said second portion through said clutch;
- a first motor generator (MG1) integrating said first flywheel (FW1),
- elaborating means (CPU) configured to control said first motor generator in such a way to adjust a crankshaft speed during gear shift as long as the main clutch is in disengagement condition, in order to adapt the crankshaft speed with an input shaft speed for a soft consequent main clutch engagement;
wherein the first and second flywheels are interconnected through a vibration damper (VD), and
wherein said first motor generator (MG1) integrates said first flywheel;
**characterized in that** said second flywheel defines the basis of a bell (BL); the main clutch (CL) being arranged in said bell;
wherein said vehicle further comprises a second motor-generator (MG2) arranged between said main clutch (CL) and said input shaft (PS) and partially arranged within said bell (BL).

2. Vehicle according to claim 1, wherein said second motor-generator (MG2) comprises a rotor connecting the main clutch (CL) to said input shaft (PS).

3. Vehicle according to claim 1, wherein the first motor-generator is integrated into said first flywheel, while the second motor-generator is at least partially integrated into said second flywheel.

4. Vehicle according to anyone of the previous claims, wherein said elaborating means are configured to slowdown said crankshaft during up-shifting, so as to recover electric energy.

5. Vehicle according to claim 1, wherein said second motor-generator (MG2) interconnects said main clutch (CL) and said input shaft (PS), and wherein said elaborating means (ECU) are further configured to control said second motor-generator to adjust the input shaft speed in order to improve a synchronization of the gear shifting.

6. Vehicle according to claims 4 and 5, wherein said electric energy, recovered during slowdown of said crankshaft, is exploited to control said second motor-generator so as to adjust the input shaft speed.

7. Vehicle according to any one of the previous claims, wherein, when the crankshaft speed is to be increased, said elaborating means are configured to speed up said combustion engine by controlling a corresponding fuel injection and to adjust a consequent speed dynamics through said first motor-generator.

8. Vehicle according to any one of the previous claims, further comprising energy storage means (BATT) operatively connected to said first motor generator (MG1) in order to exploit recovered electric energy in other operating conditions.

9. Vehicle according to claims 5 and 8, wherein said second motor-generator is operatively connected to said energy storage means in order to exploit recovered electric energy in other operating conditions.

10. Vehicle according to claim 1 or 2 or 3 or 5, wherein said first and second motor-generators are arranged to operate in parallel and simultaneously when said main clutch is in an engagement condition.

## Patentansprüche

1. Fahrzeug, das Folgendes umfasst:
- Antriebsräder;
- eine Brennkraftmaschine (ICE), die eine Kurbelwelle (CH) aufweist;
- eine Kraftübertragungsanordnung, die ausgelegt ist, eine Antriebskraft von der Kurbelwelle zu den Antriebsrädern zu übertragen; wobei die Kraftübertragungsanordnung Folgendes umfasst:
a) ein Doppelmassenschwungrad (DFW; FW1, FW2), das Folgendes umfasst:
(1) einen ersten Abschnitt (FW1), der direkt an die Kurbelwelle (CH) gekoppelt ist und einem ersten Schwungrad entspricht, und
(2) einen zweiten Abschnitt (FW2), der einem zweiten Schwungrad entspricht,
b) eine Hauptkupplung (CL),
c) ein Getriebe (GB), das zwischen der Hauptkupplung (CL) und den Antriebsrädern angeordnet ist und eine Antriebswelle (PS) umfasst, die über die Kupplung mit dem zweiten Abschnitt verbunden werden kann;
- einen ersten Motorgenerator (MG1), der das erste Schwungrad (FW1) integriert, und
- Verarbeitungsmittel (CPU), die konfiguriert sind, den ersten Motorgenerator derart zu steuern, dass eine Kurbelwellendrehzahl während des Gangwechsels eingestellt wird, solange die Hauptkupplung im ausgerückten Zustand ist, um die Kurbelwellendrehzahl für einen sanften folgenden Hauptkupplungseingriff an eine Antriebswellendrehzahl anzupassen;
wobei das erste und das zweite Schwungrad durch einen Schwingungsdämpfer (VD) verbunden sind und
der erste Motorgenerator (MG1) das erste Schwungrad integriert;
**dadurch gekennzeichnet, dass** das zweite Schwungrad die Basis einer Glocke (BL) definiert; wobei
die Hauptkupplung (CL) in der Glocke angeordnet ist und
das Fahrzeug ferner einen zweiten Motorgenerator (MG2) umfasst, der zwischen der Hauptkupplung (CL) und der Antriebswelle (PS) angeordnet ist und teilweise in der Glocke (BL) angeordnet ist.

2. Fahrzeug nach Anspruch 1, wobei der zweite Motorgenerator (MG2) einen Rotor umfasst, der die Hauptkupplung (CL) mit der Antriebswelle (PS) verbindet.

3. Fahrzeug nach Anspruch 1, wobei der erste Motorgenerator in das erste Schwungrad integriert ist, während der zweite Motorgenerator mindestens teilweise in das zweite Schwungrad integriert ist.

4. Fahrzeug nach einem der vorhergehenden Ansprüche, wobei die Verarbeitungsmittel konfiguriert sind, die Kurbelwelle während des Hochschaltens zu verlangsamen, um elektrische Energie zurückzugewinnen.

5. Fahrzeug nach Anspruch 1, wobei der zweite Motorgenerator (MG2) die Hauptkupplung (CL) und die Antriebswelle (PS) verbindet und die Verarbeitungsmittel (ECU) ferner konfiguriert sind, den zweiten Motorgenerator zu steuern, die Antriebswellendrehzahl einzustellen, um eine Synchronisation des Gangwechsels zu verbessern.

6. Fahrzeug nach Anspruch 4 und 5, wobei die elektrische Energie, die während der Verlangsamung der Kurbelwelle zurückgewonnen worden ist, ausgenutzt wird, um den zweiten Motorgenerator zu steuern, um die Antriebswellendrehzahl einzustellen.

7. Fahrzeug nach einem der vorhergehenden Ansprüche, wobei die Verarbeitungsmittel konfiguriert sind, dann, wenn die Kurbelwellendrehzahl erhöht werden soll, die Brennkraftmaschine durch Steuern einer entsprechenden Kraftstoffeinspritzung zu beschleunigen und eine folgende Drehzahldynamik durch den ersten Motorgenerator einzustellen.

8. Fahrzeug nach einem der vorhergehenden Ansprüche, das ferner Energiespeichermittel (BATT) umfasst, die mit dem ersten Motorgenerator (MG1) funktionstechnisch verbunden sind, um zurückgewonnene elektrische Energie in weiteren Betriebszuständen auszunutzen.

9. Fahrzeug nach den Ansprüchen 5 und 8, wobei der zweite Motorgenerator mit den Energiespeichermitteln funktionstechnisch verbunden ist, um zurückgewonnene elektrische Energie in weiteren Betriebszuständen auszunutzen.

10. Fahrzeug nach Anspruch 1 oder 2 oder 3 oder 5, wobei der erste und der zweite Motorgenerator ausgelegt sind, parallel und gleichzeitig zu arbeiten, wenn die Hauptkupplung in einem eingerückten Zustand ist.

## Revendications

1. Véhicule comprenant :
- des roues motrices ;
- un moteur à combustion interne (ICE) comportant un vilebrequin (CH) ;
- un agencement de transmission agencé pour transférer une propulsion du vilebrequin aux roues motrices ; l'agencement de transmission comprenant :
a) un volant bi-masse (DFW ; FW1, FW2) comprenant :
(1) une première partie (FW1) couplée directement au vilebrequin (CH) et correspondant à un premier volant, et
(2) une seconde partie (FW2) correspondant à un second volant,
b) un embrayage principal (CL),
c) une boîte de vitesses (GB) agencée entre l'embrayage principal (CL) et lesdites roues motrices, et comprenant un arbre d'entrée (PS) apte à être interconnecté avec ladite seconde partie par l'intermédiaire dudit embrayage ;
- un premier moteur-générateur (MG1) intégrant ledit premier volant (FW1),
- des moyens d'élaboration (CPU) configurés pour commander ledit premier moteur-générateur de manière à ajuster une vitesse de vilebrequin au cours d'un changement de rapport tant que l'embrayage principal est dans un état de désengagement, afin d'adapter la vitesse de vilebrequin à une vitesse d'arbre d'entrée pour un engagement d'embrayage principal consécutif en douceur ;
dans lequel les premier et second volants sont interconnectés par l'intermédiaire d'un amortisseur de vibration (VD), et
dans lequel ledit premier moteur-générateur (MG1) intègre ledit premier volant ;
**caractérisé en ce que** ledit second volant définit la base d'une cloche (BL) ; l'embrayage principal (CL) étant agencé dans ladite cloche ;
dans lequel ledit véhicule comprend en outre un second moteur-générateur (MG2) agencé entre ledit embrayage principal (CL) et ledit arbre d'entrée (PS) et agencé partiellement à l'intérieur de ladite cloche (BL).

2. Véhicule selon la revendication 1, dans lequel ledit second moteur-générateur (MG2) comprend un rotor reliant l'embrayage principal (CL) audit arbre d'entrée (PS) .

3. Véhicule selon la revendication 1, dans lequel le premier moteur-générateur est intégré dans ledit premier volant, tandis que le second moteur-générateur est au moins partiellement intégré dans ledit second volant.

4. Véhicule selon l'une quelconque des revendications précédentes, dans lequel lesdits moyens d'élaboration sont configurés pour ralentir ledit vilebrequin lors d'un passage à un rapport supérieur, de manière à récupérer de l'énergie électrique.

5. Véhicule selon la revendication 1, dans lequel ledit second moteur-générateur (MG2) interconnecte ledit embrayage principal (CL) et ledit arbre d'entrée (PS), et dans lequel lesdits moyens d'élaboration (ECU) sont en outre configurés pour commander ledit second moteur-générateur pour ajuster la vitesse d'arbre d'entrée afin d'améliorer une synchronisation du changement de rapport.

6. Véhicule selon les revendications 4 et 5, dans lequel ladite énergie électrique, récupérée lors d'un ralentissement dudit vilebrequin, est exploitée pour commander ledit second moteur-générateur de manière à ajuster la vitesse d'arbre d'entrée.

7. Véhicule selon l'une quelconque des revendications précédentes, dans lequel, lorsque la vitesse de vilebrequin doit être augmentée, lesdits moyens d'élaboration sont configurés pour accélérer ledit moteur à combustion en commandant une injection de carburant correspondante et pour ajuster une dynamique de vitesse consécutive par l'intermédiaire dudit premier moteur-générateur.

8. Véhicule selon l'une quelconque des revendications précédentes, comprenant en outre des moyens de stockage d'énergie (BATT) reliés fonctionnellement audit premier moteur-générateur (MG1) afin d'exploiter de l'énergie électrique récupérée dans d'autres conditions de fonctionnement.

9. Véhicule selon les revendications 5 et 8, dans lequel ledit second moteur-générateur est relié fonctionnellement auxdits moyens de stockage d'énergie afin d'exploiter de l'énergie électrique récupérée dans d'autres conditions de fonctionnement.

10. Véhicule selon la revendication 1 ou 2 ou 3 ou 5, dans lequel lesdits premier et second moteurs-générateurs sont agencés pour fonctionner en parallèle et simultanément lorsque ledit embrayage principal est dans un état d'engagement.
